# EUROPÄISCHE PATENTANMELDUNG

(11) **EP 2 674 569 A1**
(43) Veröffentlichungstag der Anmeldung: **18.12.2013**
(21) Anmeldenummer: 12405057.6
(22) Anmeldetag: 15.06.2012
(51) Int. Cl.: E21D 11/38

(54) **Fugendichtung für Rohrvortriebe**

(71) Anmelder: Trümpi, Stefan, 8762 Schwändi (CH)
(72) Erfinder: Trümpi, Stefan, 8762 Schwändi (CH)
(74) Vertreter: Roshardt, Werner Alfred

(57) **Zusammenfassung**

Bei einer im Rohrvortriebsverfahren erstellten Rohrleitung mit mindestens zwei Rohrelementen (2.1, 2.2) mit je einer Stirnseite (3.1, 3.2) ist zwischen den Stirnseiten eine Fuge (1) gebildet, in welcher sich ein Schlauch (4) als Druckübertragungsmittel und Dichtung befindet. Der Schlauch ist insbesondere für den Rohrvortrieb geeignet. Der Schlauch wird durch ein formstabiles Verbindungsstück (5) zu einem Ring geschlossen. An den Stirnseiten der Rohrelemente befinden sich Aussparungen (11.1, 11.2), welche mit elastischen Elementen (12.1, 12.2) gefüllt sind, in welche das starre Verbindungsstück gebettet wird. Das Verbindungsstück weist eine innere Stützhülse (6) und eine äussere Manschette (7) auf. Durch einen Umformprozess klemmt die äussere Manschette einen zwischen der inneren Stützhülse und der äusseren Manschette befindlichen Abschnitt des Schlauchs ein. Das Verbindungsstück besitzt einen zusätzlichen Zugang (10), der ins Innere der Rohrleitung zeigt. Über den Zugang kann das Innere des Schlauchs gefüllt, entleert und kontrolliert werden.

## Beschreibung

### Technisches Gebiet

Die Erfindung betrifft eine Rohrleitung mit mindestens zwei Rohrelementen mit je einer Stirnseite, wobei zwischen den Stirnseiten eine Fuge gebildet ist, in welcher sich ein Schlauch als Druckübertragungsmittel und Dichtung befindet, welcher für den Rohrvortrieb geeignet ist. Ferner bezieht sich die Erfindung auf ein Verfahren zum Erstellen einer Rohrleitung mit mindestens zwei Rohrelementen mit je einer Stirnseite, wobei zwischen den Stirnseiten eine Fuge gebildet ist, in welcher sich ein Schlauch als Druckübertragungsmittel und Dichtung befindet, welcher für den Rohrvortrieb geeignet ist.

### Stand der Technik

Das Verlegen von Vortriebselementen, insbesondere Rohrleitungen, erfolgt klassisch in einer Grube: nach dem Ausheben der Grube werden die einzelnen Elemente des Rohrs stückweise zusammengesetzt, abgedichtet und anschliessend wieder eingedeckt.

Nicht in jedem Gelände ist jedoch dieses Vorgehen möglich. In einem überbauten oder sonst wie an der Oberfläche gestalteten Gelände bietet sich der Rohrvortrieb als Alternative an. Durch den Rohrvortrieb wird die Umgebung kaum gestört, zudem ist die Bauweise witterungsunabhängig.

Dabei wird ausgehend von einem abgeteuften Schacht als Startbaugrube ein Tunnel gebohrt und der Rohrstrang durch sukzessives Anlegen von Rohrelementen in der Startbaugrube in das Erdreich gepresst. Die Richtung des Rohrvortriebs wird durch ein steuerbares Kopfstück gegeben. Ein Rohrelement wird dazu in den Schacht abgesenkt und vorgepresst, bis das nächste Rohrelement angesetzt werden kann.

In einem Zielschacht kann das Kopfstück der Tunnelbohrvorrichtung entnommen werden und die notwendigen Abschlussarbeiten vorgenommen werden.

Je länger die vorgetriebene Rohrleitung ist, umso höher werden die erforderlichen Vorpresskräfte infolge der Mantelreibung zwischen dem Erdreich und den Vortriebselementen. Bei Bedarf können Zwischenpressstationen oder Zwischenschächte für weitere Pressvorrichtungen erstellt werden, um somit die Reichweite entsprechend erhöhen zu können.

Die hohen Vortriebskräfte müssen möglichst gleichmässig und ohne lokale Spannungskonzentrationen stirnseitig von Rohrelement zu Rohrelement übertragen werden. Im Direktkontakt ist das aber nicht ohne Beschädigungen möglich. Daher werden z. B. dem Rohrquerschnitt entsprechende Druckübertragungsringe aus Holzwerkstoffen zwischen die Rohrelemente eingelegt.

Beim Rohrvortrieb werden die Vortriebselemente sowohl in axialer als auch in radialer Richtung stark beansprucht. Es müssen der Brustwiderstand und die Reibung zwischen dem Mantel des Rohrs und dem Erdreich überwunden werden. Durch Richtungskorrekturen nehmen die Vorpresskräfte abermals zu, zudem entsteht so eine ungleichförmige Verteilung der Druckspannungen auf den Rohrstirnseiten und im Rohrelement selbst. Weitere Einwirkungen, wie z. B. Zwängungskräfte und Eigengewicht, beanspruchen die Rohre auch in radialer Richtung. Geeignete Elemente in den Fugen können den Rohrvortrieb erleichtern.

Geeignete ringförmige Elemente sind in verschiedenen Ausführungsformen bekannt.

So wird in der CH 574023 A5 eine Fugendichtung zwischen zwei Rohrelementen eines Rohrstrangs beschrieben, der im Rohrvortrieb hergestellt wird. Zwischen den Stirnseiten der einzelnen Rohrelemente wird ein flacher Schlauchring als Dehnelement angeordnet. Die beiden Enden des Schlauchs sind durch ein Verbindungsstück aus Blech, das Einfüll- und Entlüftungsstutzen aufweist, zusammengefügt. Der dabei gebildete Hohlraum ist mit einem unter Druck stehenden Füllmittel so auspressbar, dass die Stirnseiten der benachbarten Rohrelemente auseinandergedrückt werden.

Aus der EP 0 340 658 A2 ist eine ringförmige Dichtung aus Gummi bekannt, welche ebenfalls zum Abdichten der Verbindungsstellen zwischen Rohrelementen eines Rohrvortriebssystems geeignet ist. Die Dichtung enthält einen aktivierbaren Hohlraum, der an einen Injektionskanal angeschlossen ist. Zur Aktivierung der Dichtung sind zwei dünne Metallrohre als Injektionskanäle vorgesehen, durch welche ein Fluid in den Hohlraum eingespritzt werden kann.

Auch die WO 2005/080753 zeigt einen Schlauch zur Verwendung im Rohrvortrieb, der über eine Armatur zugänglich ist. Die tatsächliche Ausführung der Armatur und ihre genaue Positionierung sind nicht beschrieben.

Die US 3,005,314 beschreibt einen aufblasbaren Schlauch, der zwischen zwei Rohrelementen eines Tunnels angeordnet ist und einen Stutzen für ein Druckmedium aufweist. Der Schlauch wird während des Tunnelvortriebs aufgeblasen, um das Rohrelement vorwärts zu treiben. Der Stutzen ragt wie das Ventil eines Fahrradschlauches ins Innere des Ringes.

Die US 2,333,826 beschreibt ein schlauchförmiges Dichtungselement, das zwischen Rohrsegmenten transversal und longitudinal verlegt und anschliessend über eine Armatur mit einer später aushärtenden Substanz gefüllt wird. Über den so aufgebauten Druck werden die Rohrelemente zusammengedrückt und abgedichtet. Die Schlauchenden sind über ein T-Zwischenstück verbunden, indem sie auf einer Stützhülse aufgeschoben und mit dieser verklebt sind oder vulkanisiert sind. Der Schlauch kann beim Einbetonieren festgebunden werden.

Die bekannten dichtenden Elemente bestehen aus einem Schlauchstück, aus dem durch ein Verfahren (z. B. Vulkanisieren) ein geschlossener Ring gebildet wird. Dieser Verfahrensschritt muss für jedes Schlauchmaterial und jede Änderung in der Grösse optimiert werden, was einen grossen Aufwand bei der Herstellung bedeutet.

Ein weiterer Nachteil besteht darin, dass der starre Zugang (Anschlussarmatur, Schlauchabschluss, Manometerabgriff) sich neben oder in einer Fuge zwischen zwei Rohrelementen befindet. Es besteht daher immer die Gefahr, dass diese formstabilen Bauteile beim Verlegen der Rohrelemente eingeklemmt und dabei beschädigt oder gar ganz zerstört werden. Gleichzeitig besteht auch die Gefahr der Zerstörung der Rohrelemente, wenn der lokale Druck auf das Rohr das Material des Rohrs überbelastet.

### Darstellung der Erfindung

Aufgabe der Erfindung ist es, eine dem eingangs genannten technischen Gebiet zuzuordnende Rohrleitung zu schaffen, welche im Rohrvortrieb kostengünstig und zeitsparend erstellt werden kann und gleichzeitig auf Dauer dicht ist. Weiter ist es Aufgabe der Erfindung, ein Verfahren zum zeitsparenden und kostengünstigen Erstellen einer solchen Rohrleitung bereit zu stellen.

Die Lösung der Aufgabe ist hinsichtlich der Rohrleitung durch die Merkmale des Anspruchs 1 definiert. Dabei handelt es sich um eine durch die Methode des Rohrvortriebs herstellbare Rohrleitung, die aus mindestens zwei Rohrelementen besteht. Zwischen den Stirnseiten dieser Rohrelemente ist eine Fuge gebildet. In dieser Fuge befindet sich als Druckübertragungsmittel und Dichtung ein Schlauch, welcher für den Rohrvortrieb geeignet ist. In dem ringförmigen Schlauch befindet sich ein formstabiles (und damit starres) Verbindungsstück. Der Schlauch ist so zwischen die Rohrelemente eingelegt, dass das starre Verbindungsstück in elastische Elemente gebettet wird, die sich in Aussparungen an den Stirnseiten der Rohrelemente befinden. Die Erfindung kann sowohl beim Rohrvortrieb bzw. Pressvortrieb, beim Micro-Tunneling, Pipe-Jacking oder unterirdischen Rohrvortrieb eingesetzt werden.

Die Erfindung basiert auf folgender Erkenntnis: Die für den Rohrvortrieb geeigneten Schläuche müssen hohen Druck (typischerweise mehr als 100 bar, z. B. mindestens 300 bar oder sogar weit über 500 bar) aushalten. Sie sind typischerweise durch ein elastisches, mit Stahl armiertes Material gebildet und daher relativ aufwändig in der Herstellung. Sie werden ab Rolle angeboten, nicht aber in einer in sich geschlossenen Form, wie es für die Fuge zwischen zwei im Querschnitt runden, rechteckigen oder vieleckigen Rohren erforderlich wäre. Die Schläuche ab Rolle ("Endlosprodukte") sind zwar relativ kostengünstig, können aber nicht einfach zu einer geschlossenen Form (Ring, Rechteck, Vieleck etc.) vulkanisiert oder anderweitig verbunden werden, die über ihre gesamte Länge schlauchartig flexibel und damit dichtend ist und gleichzeitig die erforderlichen Drücke ertragen kann. Der Grundgedanke der Erfindung liegt nun darin,
● mittels üblicher Methoden herstellbares Schlauchmaterial ab Rolle zu verwenden,
● dieses Material in Schlauchstücke gewünschter Länge aufzuteilen und
● die Enden eines Schlauchstücke durch ein formstabiles Verbindungsstück miteinander zu verbinden und
● die Stelle mit dem formstabilen Verbindungsstück weich und damit dichtend in den Stirnseiten der Rohre einzubetten bzw. zu lagern.
(In ähnlicher Weise können auch zwei oder mehr Schlauchstücke zu einer geschlossenen Form zusammengesetzt werden.) An sich ist ein formstabiles (starres) Verbindungsstück nicht brauchbar in einer Fuge zwischen zwei starren Rohrelementen, die durch Rohrvortrieb im Untergrund vorgetrieben werden. Wenn aber in den an sich starren (z. B. betonierten) Rohrelementen an geeigneter Stelle eine elastische Stelle (als Lager für das Verbindungsstück) ausgebildet wird, dann ist das starre Verbindungsstück kein Problem, weder beim Rohrvortrieb noch bei der späteren dauerhaften Abdichtung.

Unter Rohrelementen versteht man längliche Hohlkörper aus im Wesentlichen starrem (unflexiblem) Material. Gewöhnlich besitzen Rohrelemente einen kreisrunden Querschnitt, sind also Kreiszylinder mit einer Mantelfläche und zwei kreisrunden Grundflächen. Dabei entsprechen die Grundflächen des Kreiszylinders den Stirnseiten des Rohrelements. Prinzipiell können Rohrelemente aber auch einen rechteckigen, ovalen, vieleckigen oder anderen Querschnitt haben. Die für den Rohrvortrieb geeigneten Rohrelemente sind vorzugsweise aus armiertem Beton hergestellt. Die Rohrelemente können aber auch aus Stahl, Polymerbeton, glasfaserverstärktem Kunststoff, weiteren Werkstoffen oder Kombinationen davon bestehen.

Beim Verlegen einer Rohrleitung werden einzelne Rohrelemente aneinander gereiht. Dabei entsteht zwischen zwei Rohrelementen eine Fuge, also ein Zwischenraum zwischen zwei Bauelementen. In diese Fuge wird ein ringförmiger Schlauch gelegt, der die Funktion der Druckübertragung und der Fugendichtung übernimmt. Eine Fugendichtung verhindert einen Stoffübergang zwischen dem Inneren und der äusseren Umgebung der Rohrleitung. Der ringförmige Schlauch entspricht hierbei im Wesentlichen einem O-Ring, bestehend aus einem Schlauch und einem formstabilen Verbindungsstück. Der Schlauch ist mit einem flüssigen Medium befüllbar und kann unter Druck gesetzt werden. Ein für den Rohrvortrieb geeigneter Schlauch nimmt Deformationen auf, die sich z. B. aufgrund einer Richtungsänderung der Rohrleitung ergeben.

Das formstabile Verbindungsstück wird in elastische Elemente gebettet, die sich an den Stirnseiten der Rohrelemente befinden. Die elastischen Elemente wirken als Polster, sie verändern unter Krafteinfluss ihre Form und können so die durch die Geometrie des starren Verbindungsstücks bedingten Deformationen kompensieren.

Eine bevorzugte Methode zum Verlegen von Rohrleitungen ist der Rohrvortrieb. Dabei werden von einer vorbereiteten Startbaugrube aus Rohrelemente mit Pressen sequentiell in den Baugrund vorgepresst, bis eine Zielbaugrube erreicht wird. Diese Technik erfordert keine offene Bauweise und führt somit nur zu einer geringen Beeinflussung der Umgebung. Zusätzlich ist sie witterungsunabhängig und bietet eine hohe Präzision. Es müssen jedoch Spezialrohre verwendet werden, die den hohen Vortriebskräften standhalten können. Zudem ist es von Vorteil, wenn während des Vortriebs der Druck in den Schläuchen und ihre Verformung gemessen werden können, um daraus die zulässige Belastung der Rohrelemente zu ermitteln, wie in der EP 1 727 964 B1 (Trümpi) beschrieben.

Die elastischen Elemente, in die das formstabile Verbindungsstück eingebettet ist, bestehen aus einem dauerelastischen Material wie z. B. NBR (Nitrile Butadiene Rubber) oder Neopren. Das Material soll möglichst langlebig sein und nicht spröde werden. Zudem soll es mit Vorteil robust gegen äussere Einflüsse (Feuchtigkeit, Säuren, Laugen) sein.

Gegenstand der Erfindung ist auch ein für das Rohrvortriebsverfahren geeigneter flexibler Schlauch, welcher mit Hilfe eines formstabilen Verbindungsstücks einen geschlossenen Ring bildet und den entsprechend hohen Drücken standhalten kann.

Zudem ist Gegenstand der Erfindung ein Rohrelement, das an mindestens einer Stirnseite eine Aussparung aufweist, in welcher ein elastisches Element enthalten ist, um ein formstabiles Verbindungsstück einzubetten. Die Aussparung kann in Umfangsrichtung von beschränkter Länge sein. Denkbar ist aber auch eine umlaufende Aussparung bzw. ein umlaufendes elastisches Element.

Schlauchring und Rohrelement können als Bausatz zum Erstellen einer Rohrleitung verstanden werden.

Die Erfindung basiert auf einer als Druckübertragungsmittel und Dichtung wirkenden Fugenkonstruktion umfassend ein erstes und ein zweites Bauteil (z. B. Rohrelement) als Begrenzung einer zwischen ihnen gebildeten Fuge und einen Schlauch (welcher z. B. für den Rohrvortrieb ausgebildet ist), welcher die Fuge dichtend auszufüllen vermag, wobei der Schlauch ein formstabiles Verbindungsstück aufweist, und die Bauteile in einer Umgebung des Verbindungsstücks elastische Elemente aufweisen, in welche das Verbindungsstück eingebettet ist.

Da der verwendete Schlauch nicht spiralförmig, sondern als geschlossener O-Ring eingesetzt wird, kann er sowohl für die Druckübertragung als auch für das Dichten verwendet werden.

Durch die Verwendung der elastischen Elemente zur Einbettung des formstabilen Verbindungsstücks wird dieses während des Vortriebs der Rohrelemente davor geschützt, eingeklemmt und/oder zerquetscht zu werden. Gleichzeitig wird das Rohrelement vor Zerstörung geschützt. Die Änderung des Fugenspalts im Verlauf des Rohrvortriebs muss nicht durch das Verbindungsstück aufgenommen werden, sondern wird von den elastischen Elementen abgefangen. Das starre Verbindungsstück wie auch das Rohrelement sind somit geschützt, und es wird auch die Dichtwirkung im Bereich des Verbindungsstücks sichergestellt.

Der Schlauch kann als Meterware bezogen werden, spezielle Anforderungen an das Dichtungsmaterial werden bei der Herstellung eines geeigneten Schlauchs berücksichtigt. Daraus ergibt sich ein flexibles und kostengünstiges Bausatzprinzip, Spezialanfertigungen sind nicht notwendig.

Mit diesem ringförmigen Schlauch kann man nicht nur gerade Rohrleitungen realisieren, sondern auch Rohrleitungen mit Kurven. Durch die Einbettung des Verbindungsstücks ist auch in der Kurve die Dichtung sichergestellt.

### Radial verformte Manschette:

Optional weist das Verbindungsstück eine innere Stützhülse und eine äussere Manschette auf. Die Stützhülse ist ein kurzes formstabiles Rohrstück, das in die zu verbindenden Enden des Schlauchs (bzw. der Schlauchstücke) gesteckt wird. Das genannte Rohrstück kann einen kreisrunden, ovalen oder vieleckigen Querschnitt aufweisen. Die Enden des Rohrstücks können gerippt oder gewellt sein oder sonstige mechanische Elemente (z. B. Haken) aufweisen, um ein Abrutschen des Schlauchs zu verhindern. Die Schlauchenden werden mit der äusseren Manschette auf dem Rohrstück fixiert. Die Manschette kann im Inneren Widerhaken oder andere vorspringenden Elemente enthalten, die zusätzlich verhindern, dass der Schlauch abrutschen kann. Vorzugsweise ist die Manschette plastisch verformt und dadurch radial auf den Schlauch und die innere Stützhülse gepresst. Aber auch andere Umformprozesse sind denkbar.

Die Manschette kann auch durch zwei (z. B. mit einem Spannmechanismus ausgestattete) Schlauchschellen bzw. -briden ersetzt werden, welche die Schlauchenden auf die Stützhülse pressen. Da das Schlauchmaterial flexibel ist und somit dem Druck der äusseren Manschette nachgibt, resultiert daraus automatisch eine druckfeste Abdichtung. Diese Schlauchverbindung als solche ist nicht flexibel und hält dem auftretenden Druck (von z. B. mehreren Hundert bar) stand. Insgesamt ergibt sich so ein druckfester Schlauchring. Dieser kann auch aus mehr als einem Schlauchstück und mehr als einem starren Verbindungsstück bestehen. Der ringförmige (oder eine sonstige, in sich geschlossene Form bildende) Schlauch kann einen zusammenhängenden Innenraum aufweisen, oder segmentierte, voneinander getrennte Innenräume. Das Druckübertragungs- und Dichtmittel kann durch ein einziges Schlauchstück (dessen Enden zur Bildung eines Rings verbunden sind) oder durch zwei oder mehr Schlauchstücke, die zu einer in sich geschlossenen Form gebildet sein.

Es ist nicht zwingend, dass die äussere Manschette plastisch deformiert wird. Sie kann auch einfach elastisch verformt sein, um den Schlauch festzuhalten. Es ist auch denkbar, dass die Manschette nicht deformiert wird und stattdessen die innere Hülse radial aufgeweitet wird.

### Verbindungsstück mit Zugang:

Optional besitzt das Verbindungsstück einen zusätzlichen Zugang, durch welchen ein Medium in den Schlauch eingefüllt oder aus ihm abgelassen werden kann. Das Verbindungsstück ist dann quasi T-förmig. Der Zugang ist z. B. als starrer Stutzen ausgebildet, welcher zum Zentrum des Schlauchrings gerichtet ist, so dass er aus dem Inneren der Rohrleitung angeschlossen werden kann. Anstelle eines starren Stutzens kann aber auch ein flexibles druckfestes Schlauchstück verwendet werden. Der Zugang hat typischerweise einen kleineren Innenquerschnitt als das Verbindungsstück bzw. der zu einem Ring geschlossene Schlauch.

Es sind statt T-förmige Abgriffe auch andere denkbar, z. B. Y-förmige oder doppelte. Insbesondere wenn ein Schlauchring aus mehreren Schlauchstücken zusammengesetzt wird, können neben den T-förmigen Verbindungsstücken auch I-förmige (d. h. abgriffslose) verwendet werden.

### Ventil mit Druckmessgerät:

Vorzugsweise ist am zusätzlichen Zugang (bzw. am Abgriff) ein Druckmessgerät und/oder ein Ventil angebracht. Das Ventil kann z. B. gezielt geöffnet und geschlossen werden, um die Menge des Fluids (z. B. Luft) im Ringschlauch zu verändern. Insbesondere für den Rohrvortrieb ist es von Vorteil, mit einem Druckmessgerät den Druck im ringförmigen Schlauch zu messen.

Das Ventil kann im Verbindungsstück (d. h. im zusätzlichen Zugang) integriert sein. Es kann aber auch nur eine mechanische Kupplung (Gewinde, Bajonett) vorgesehen sein, um bei Bedarf eine separate Leitung mit Ventil und/oder Manometer anzuschliessen.

### Elastische Elemente an Rohrelementen angebracht:

Die elastischen Elemente, welche sich in den Aussparungen an den Stirnseiten der Rohrelemente befinden, können optional an den Rohrelementen befestigt sein. Sie können bei der Herstellung der Rohrelemente in den Beton eingelegt werden, oder mit Halterungen (z. B. Bügeln), die in dem Rohrelement verankert sind, festgehalten werden. Sie können auch mit den Armierungen in der Rohrwand verbunden werden. Dieser Arbeitsschritt wird bereits vorher ausgeführt und muss nicht während des Rohrvortriebs gemacht werden. Die Rohrelemente können also mit den bereits werkseitig montierten elastischen Elementen auf der Baustelle angeliefert werden. Beim Aneinanderfügen zweier Rohrelemente wird somit Zeit eingespart, da die elastischen Elemente nicht mehr eingebaut werden müssen. Zudem können sie während des Zusammenfügens nicht verrutschen.

Die Aussparungen in den Stirnseiten der Rohrelemente können auch so gestaltet werden, dass die elastischen Elemente aufgrund der spezifischen Aussenform festgehalten werden (Schwalbenschwanzverbindung, Kamm-Nut-Verbindung, konische Verengung im Bereich der Öffnung der Aussparung etc.).

### Deformationsbereich:

Die erforderliche Grösse der elastischen Elemente hängt von den Dimensionen des starren Verbindungsstücks ab. Vorzugsweise weisen die elastischen Elemente in Längsrichtung der Rohrelemente gemessen einen Deformationsbereich auf, der mindestens so gross ist wie ein halber maximaler Durchmesser des Schlauchs abzüglich einer Wandstärke des Schlauchs. Bei einer solchen Dimensionierung ist das Verbindungsstück stets ausreichend eingebettet, unabhängig davon, ob der Schlauch in einem nicht komprimierten (und daher z. B. kreisrunden) Zustand oder in einem maximal komprimierten (und damit flachen) Zustand ist.

Die summierte Kompressionslänge (Deformierbarkeit) der elastischen Elemente in Richtung der Längsachse der Rohrelemente soll also mindestens so gross sein, wie der Durchmesser des Verbindungsstücks abzüglich der Dicke des maximal gequetschten Schlauchs. Es versteht sich, dass die Breite der elastischen Elemente in Umfangsrichtung der Stirnseite des Rohrelements mindestens so gross sein soll, wie die Länge des Verbindungsstücks zuzüglich der durch das starre Verbindungsstück versteiften Schlauchabschnitte , so dass diese vollständig eingebettet werden.

Es ist aber auch möglich, dass ein elastisches Element einen geringeren Deformationsbereich aufweist, insbesondere bei nicht kreisrunden sondern ovalen Verbindungsstücken. Auch können die Deformationsbereiche asymmetrisch ausgebildet sein, d. h. die beiden elastischen Elemente, welche je auf einer Seite des Verbindungsstücks (und damit der Fuge) platziert werden, können unterschiedlich stark komprimierbar sein.

### Rohrelemente aus Beton:

Wie bereits erwähnt, sind die Rohrelemente vorzugsweise aus armiertem Beton hergestellt, damit sie den hohen Vortriebskräften, die beim Rohrvortriebsverfahren auftreten, standhalten können.

Es ist aber keineswegs ausgeschlossen, dass die Rohre z. B. aus faserverstärktem Beton, aus Stahl oder aus einem anderen, ausreichend festen Werkstoff bestehen. Wenn die Rohrleitung nicht durch Rohrvortrieb erstellt wird, können auch Rohrelemente verwendet werden, die weniger belastbar sind. Mit anderen Worten: Es ist nicht zwingend, dass die Rohre für den Rohrvortrieb geeignet sind.

### Rohrmanschette aussen am Rohrelement:

Optional ist an einer Stirnseite des Rohrelements eine Rohrmanschette angebracht, welche die Fuge überdeckt und gegen aussen schützt. Dadurch wird auch der Schlauch in der Fuge gegen eindringendes Bruchmaterial bzw. Erdmaterial geschützt.

Die Rohrmanschette ist an der dem Schlauchring gegenüberliegenden Seite des Rohrelements befestigt. Es ist alternativ denkbar, dass die Manschette an derselben Stirnseite angeordnet ist, wie der befestigte Schlauchring. Natürlich kann die Rohrmanschette auch separat vom Rohrelement angeliefert und jeweils an die hintere Stirnseite des letzten Rohrelements der Leitung angebracht werden.

Die äussere Rohrmanschette hat typischerweise eine Länge (in Längsrichtung des Rohrelements), welche grösser ist als die maximale Fugenbreite, so dass das nachfolgende Rohrelement umfasst und richtungsmässig geführt wird. Insbesondere hat der ringförmige Schlauch vollständig unter der Rohrmanschette Platz. Die Rohrmanschette erlaubt eine bewegliche Verbindung und eine Führung der Rohrelemente (quer zur Richtung der Rohrleitung).

Anstelle einer umlaufenden, geschlossenen Rohrmanschette sind auch mehrere separate, auf dem Umfang verteilte Führungselemente denkbar.

### Rohrmanschette und Schlauch an gegenüberliegenden Rohrstirnseiten:

Eine weitere Option besteht darin, dass der ringförmige Schlauch mit Halterungen an der einen Stirnseite eines ersten Rohrelements befestigt ist und eine Rohr-Manschette an der anderen Stirnseite des zweiten Rohrelements. Beispielsweise ist die Halterung ein Metallbügel, dessen Enden an der Stirnseite des Rohrelements verankert (z. B. eingegossen) sind. Dies hat den Vorteil, dass der ringförmige Schlauch nicht vor Ort (z. B. im Schacht beim Platzieren des Rohrelements für den Rohrvortrieb) angebracht werden muss, sondern bereits in der Fabrik an dem Rohrelement befestigt wird und zur Baustelle transportiert werden kann. Insbesondere ist der Schlauch am Rohrelement transportsicher befestigt und fällt auch nicht heraus, wenn das Rohrelement z. B. beim Einbau gekippt werden muss, so dass die Stirnseite des Rohrelements leicht nach unten zeigt und quasi überhängend ist. Dies bedeutet eine Zeitersparnis vor Ort durch ein einfacheres Zusammensetzen der Bauteile. Auch kann die korrekte Platzierung des Schlauchs an der Stirnseite werkseitig sichergestellt werden.

Vorzugsweise ist der Schlauch an der vorderen Stirnseite des Rohrelements angebracht, das heisst auf der Stirnseite, welche in Vortriebsrichtung nach vorne zeigt und beim Einsetzen des Rohrelements an die hintere Stirnseite des letzten Rohrelements der Rohrleitung angefügt wird.

### Schlauch für Rohrvortriebsverfahren:

Die Erfindung bezieht sich auch auf einen flexiblen Schlauch mit einem erfindungsgemässen Verbindungsstück, welcher für ein Rohrvortriebsverfahren geeignet ist. Ein solcher Schlauch zeichnet sich aus durch eine in sich geschlossene Form, insbesondere einen Ring, ein Viereck oder Vieleck, und weist ein formstabiles Verbindungsstück auf, welches ein erstes und ein zweites Ende des flexiblen Schlauchs miteinander verbindet. Der Schlauch kann ein oder mehrere Verbindungsstücke aufweisen, d. h. er kann aus einem oder mehreren Schlauchstücken zusammengesetzt sein.

Der Schlauch als solcher kann die oben beschriebenen bevorzugten Merkmale aufweisen. Insbesondere ist er im Querschnitt elastisch federnd, so dass er bei Deformation quer zu seiner Längsachse bestrebt ist, in die ursprüngliche (z. B. runde) Form zurück zu gehen. Diese federnde Eigenschaft sorgt dafür, dass der Schlauch als Dichtmittel in der Fuge zwischen den Rohrelementen wirken kann.

Wird der oben beschriebene ringförmige (oder eine andere geschlossene Form bildende) Schlauch im Rohrvortrieb angewendet, ergeben sich daraus Vorteile bezüglich des Einbaus der Dichtung, da weniger darauf geachtet werden muss, das starre Element der Dichtung sowie das Rohrelement an sich nicht zu beschädigen. Es ist auch nicht mehr nötig, ein separates Dichtmittel vorzusehen.

### Rohrelement für Rohrvortriebsverfahren:

Die Erfindung bezieht sich auch auf ein Rohrelement als solches, das für eine Rohrleitung und ein Dichtungsmittel in der Art eines flexiblen Schlauchs mit integriertem starrem Verbindungsstück geeignet ist.

### Verfahren:

Das Verfahren zum Erstellen einer Rohrleitung im Rohrvortrieb benutzt mindestens zwei Rohrelemente mit je einer Stirnseite, wobei zwischen den Stirnseiten eine Fuge gebildet wird, in welcher sich ein ringförmiger, für den Rohrvortrieb geeigneter Schlauch als Druckübertragungsmittel und Dichtung befindet. Der ringförmige Schlauch weist ein starres Verbindungsstück auf. An den Stirnseiten der Rohrelemente werden Aussparungen vorgesehen, in welche elastische Elemente eingesetzt werden, in welche das formstabile Verbindungsstück gebettet wird.

Das Verfahren läuft z. B. in folgenden Schritten ab:
a) Bereitstellen eines ersten erfindungsgemässen Rohrelements (in einem Untergrund), wobei dieses eine Aussparung aufweist, in welche ein elastisches Element eingesetzt ist oder eingesetzt wird.
b) Bereitstellen eines erfindungsgemässen Schlauchs an einer hinteren Seite des ersten Rohrelements (wobei der Schlauch ein vom ersten Rohrelement separater Körper oder ein an diesem angebrachter Körper sein kann).
c) Anfügen eines zweiten erfindungsgemässen Rohrelements an das erste Rohrelement, wobei eine Fuge gebildet wird, in welcher der erfindungsgemässe Schlauch angeordnet ist. (Der Schlauch kann auch mit dem zweiten Rohrelement verbunden sein).
d) Ansetzen einer Pressvorrichtung an das hintere Ende des zweiten Rohrelements und Vortreiben der beiden Rohrelemente durch Betätigen der Pressvorrichtung.
e) Messen des Drucks und der Deformation am erfindungsgemässen Schlauch während des Vortreibens der Rohrelemente, und Steuern der Pressvorrichtung (d. h. deren Pressdruck) in Abhängigkeit vom gemessenen Druck im Schlauch.
f) Absetzen der Pressvorrichtung vom zweiten Rohrelement und Anfügen eines zweiten Schlauchs an die hintere Stirnseite des zweiten Rohrelements. Anfügen eines dritten erfindungsgemässen Rohrelements an das zweite Rohrelement, wobei zwischen zweitem und drittem Rohrelement eine Fuge gebildet wird, in welcher der zweite Schlauch angeordnet ist.
g) Ansetzen der Pressvorrichtung an das dritte Rohrelement und Vortreiben der drei Rohrelemente usw.

Dabei ist es nicht in jedem Fall nötig, dass jede Fuge mit einem Schlauch versehen ist. Zwischen dem ersten und dem zweiten oder dem zweiten und dem dritten Rohrelement kann auch auf einen Schlauch verzichtet werden. So kann z. B. nur jede zweite, jede dritte etc. Fuge mit einem Schlauch versehen sein. Die übrigen Fugen sind dann starre statt flexible Verbindungen zwischen Rohrelementen.

### Vortriebsdruck messen:

Im Rahmen der Erfindung ist es zwar vorteilhaft, aber nicht zwingend, dass über den Zugang im Schlauch der in der Rohrleitung lokal bestehende Vortriebsdruck gemessen wird. Zu erwähnen sind z. B. die "peristaltischen" Vortriebsverfahren, wie sie in der US 4,432,667 (Richardson) bekannt sind.

Ist der Rohrvortrieb abgeschlossen, werden die Messgeräte entfernt. Der im Rohrvortrieb aufgebaute Längsrichtungsdruck in der Rohrleitung bleibt teilweise bestehen bzw. wird nicht völlig abgebaut. Er hält die im Querschnitt elastischen Schläuche unter Druck und führt dazu, dass die Schläuche eine dichtende Wirkung haben. Diese Dichtwirkung kann optional verstärkt werden, indem die Schläuche bei geöffneten Ventilen zusammengepresst werden. Durch die Deformation baut sich eine abdichtungs-fördernde Rückstellkraft in den Schläuchen auf. Es ist nicht erforderlich, die Fugen mit einem zusätzlichen Dichtungsmaterial auszuspritzen. (Ein zusätzliches Ausspritzen der Fugen steht also im Widerspruch zur Erfindung.)

Entsprechend einer bevorzugten Ausführungsform werden Rohrelemente verwendet, welche vorne den z. B. ringförmigen Schlauch und hinten die (mantelseitig schützende) Manschette aufweisen. (Das erste Rohrelement der Rohrleitung benötigt natürlich keinen vorderen Schlauch.) Die Pressvorrichtung greift also an der hinteren Stirnseite an, an welcher kein Schlauch angeordnet ist. Das nächste Rohrelement wird mit dem Schlauch an der vorderen Stirnseite an das bereits im Untergrund sitzende Rohrelement angesetzt.

Während des Rohrvortriebs kann über den Zugang im ringförmigen Schlauch der Druck gemessen werden. Damit kann zusammen mit der Messung der Deformation der Fuge der Prozess überwacht werden; mit Kenntnis von Druck und Verformung der Fuge können Informationen über den statischen Zustand der Rohrleitung erhalten werden. Falls nötig, kann der Druck angepasst werden, in dem z. B. über das Ventil die Menge des im Schlauch vorhandenen Fluids variiert wird.

### Fugenkonstruktion:

Die Erfindung schlägt schliesslich auch eine Fugenkonstruktion vor, welche ein erstes und ein zweites Bauteil als Begrenzung einer zwischen ihnen gebildeten Fuge und einen Schlauch umfasst, welcher die Fuge dichtend auszufüllen vermag. Sie zeichnet sich dadurch aus, dass der flexible Schlauch ein formstabiles Verbindungsstück aufweist und dass die Bauteile in einer Umgebung des Verbindungsstücks elastische Elemente aufweisen, in welche das Verbindungsstück eingebettet ist. An der Fugenkonstruktion können zusätzlich die oben beschriebenen optionalen Merkmale der Rohrelemente und des Schlauchs vorgesehen sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen:
- Fig. 1: Eine schematische Schnittdarstellung eines Ausschnitts einer Fuge zwischen zwei Rohrelementen, in welcher ein ringförmiger Schlauch mit einem Verbindungsstück eingesetzt ist;
- Fig. 2: einen schematischen Querschnitt durch die Fuge entlang der Linie A-A der Fig. 1;
- Fig. 3: eine Variante eines Rohrelements mit einem befestigten ringförmigen Schlauch und einer Rohrmanschette;
- Fig. 4a, b: einen schematischen Querschnitt durch die Fuge im Bereich des Verbindungsstücks, wobei die Fuge einmal breit und einmal schmal ist;
- Fig. 5: eine schematische perspektivische Darstellung eines Rohrelements;
- Fig. 6: eine schematische Darstellung der Fixierung des Schlauchendes;
- Fig. 7a - c: drei verschiedene Varianten eines Schlauchrings mit einem bzw. zwei Innenräumen;
- Fig. 8: eine Variante des Verbindungsstücks mit zwei inneren Stützhülsen.
Grundsätzlich sind in den Figuren gleiche Teile mit gleichen Bezugszeichen versehen.

### Wege zur Ausführung der Erfindung

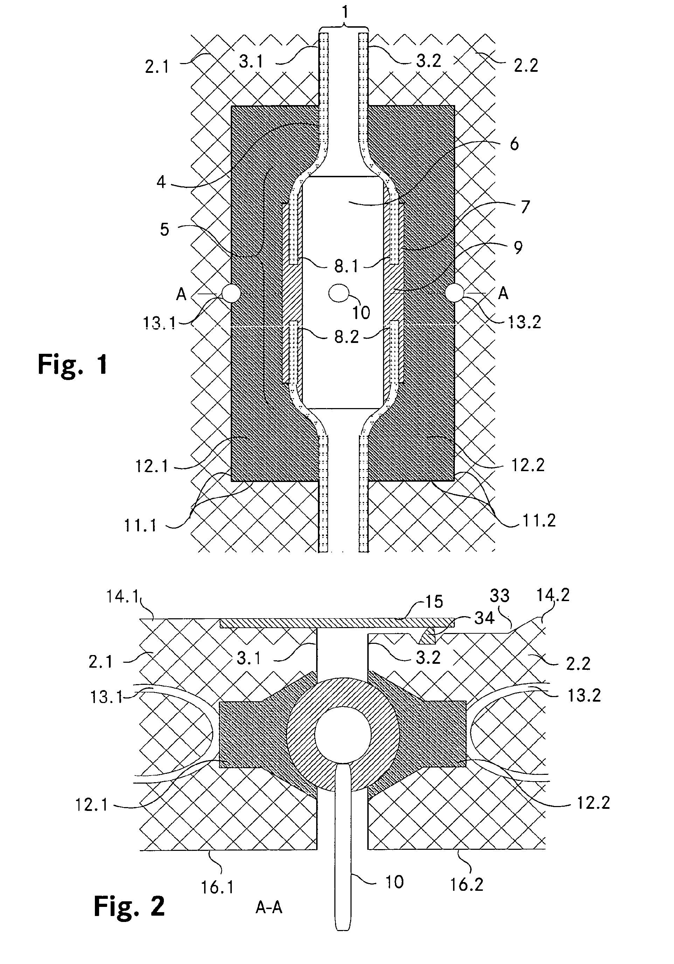

Die Fig.1 zeigt den Schnitt in Umfangsrichtung durch eine Fuge 1 einer Rohrleitung, die beispielhaft aus zwei Rohrelementen 2.1 und 2.2 aus armiertem Beton besteht. Zwischen den Stirnseiten 3.1 und 3.2 dieser beiden Rohrelemente 2.1, 2.2 ist eine Fuge 1 gebildet. In dieser Fuge 1 befindet sich als dichtendes Element ein ringförmiger Schlauch 4 aus einem (z. B. mit Stahlgewebe) armierten Elastomer.

Ein starres Verbindungsstück 5 schliesst den Schlauch zu einem geschlossenen Ring. Es besteht im Wesentlichen aus einer inneren Stützhülse 6 und einer äusseren Manschette 7, welche beide beispielsweise aus Stahl gefertigt sind. Die innere Stützhülse 6 ragt in die Enden 8.1 und 8.2 des Schlauchs 4 um eine bestimmte Länge hinein. Diese Länge ist z. B. grösser als ein Innendurchmesser der Stützhülse 6. Die äussere Manschette 7 umschliesst die Enden 8.1, 8.2 im Bereich der Stützhülse 6 von aussen und drückt sie radial auf die Stützhülse 6. Dies kann z. B. dadurch erreicht werden, dass die Manschette 7 in einer (hier nicht dargestellten) speziellen Pressvorrichtung auf die Enden 8.1, 8.2 aufgepresst wird. Bei diesem Pressvorgang wird die Manschette 7 plastisch verformt und die Schlauchenden 8.1, 8.2 werden zwischen der inneren Stützhülse und der äusseren Manschette 7 festgeklemmt.

Die beiden Enden 8.1, 8.2 des Schlauchs 4 haben einen gewissen Abstand voneinander. Dieser Abstand ist durch eine Schulter 9 an der Innenseite der Manschette 7 definiert, welche einen Anschlag für die Enden 8.1, 8.2 bildet. Die Höhe der Schulter 9 entspricht ungefähr der Wanddicke des Schlauchs 4. In der Schulter 9 ist der Zugang angeordnet. Im vorliegenden Ausführungsbeispiel umfasst der Zugang ein Rohrstück 10, welches in eine radiale Zugangsöffnung der Manschette 7 und der innenliegenden Stützhülse 6 eingesetzt ist. Das Rohrstück 10 kann mit einer Kupplung (Gewindeanschluss, Bajonettkupplung etc.) versehen sein, um ein Druckmessgerät anzuschliessen (direkt oder über eine Verbindungsleitung).

Der Zugang ist im Bereich der Schulter 9 angeordnet und verläuft zwischen den Enden 8.1, 8.2 des Schlauches hindurch. Das Rohrstück 10 ragt senkrecht zur Längsachse des Verbindungsstücks 5 weg in Richtung des Zentrums des durch den Schlauch definierten Kreisrings. Das Rohrstück 10 ist z. B. mindestens so lang, dass es aus der Fuge 1 in das Innere der Rohrleitung ragt.

An den Stirnseiten 3.1, 3.2 der beiden Rohrelemente 2.1, 2.2 ist je eine Aussparung 11.1, 11.2 vorgesehen. Diese Aussparungen 11.1, 11.2 sind mit elastischen Elementen 12.1, 12.2 gefüllt. Die elastischen Elemente 12.1, 12.2 sind z. B. Blöcke aus Neopren. Sie haben eine Länge, die grösser als die Länge des Verbindungsstücks 5 ist. Das starre Verbindungsstück 5 ist zwischen den elastischen Elementen 12.1 und 12.2 eingebettet.

In Fig. 1 ist der Innendurchmesser des Schlauchs 4 ausserhalb des Verbindungsstücks 5 kleiner dargestellt als der Aussendurchmesser der Stützhülse 6. Das heisst, der Schlauch ist dort nicht rund sondern etwas gequetscht. Der Schlauch ist mit einer nichtkomprimierbaren Flüssigkeit, z. B. Wasser gefüllt und wird vorgestaucht. Dadurch wird das Innenvolumen des Schlauchs festgelegt. Durch äusseren Druck bzw. erzwungene Fugenverdrehung wird der Schlauch verformt, während sein Innenvolumen konstant bleibt. Die elastischen Elemente 12.1, 12.2 schaffen den nötigen Spielraum, damit der Schlauchring die Fuge auch im Bereich des formstabilen Verbindungsstücks 5 abdichtet.

Die elastischen Elemente 12.1, 12.2 sind an den Stirnseiten der Rohrelemente fixiert, z. B. durch bügelartige Halterungen 13.1 und 13.2, die in den Rohrelementen 2.1, 2.2 verankert sind.

Die Fig. 2 zeigt einen Querschnitt durch die Fuge 1 einer Rohrleitung entlang der Linie A-A in Fig. 1. In dieser Ansicht ist zu sehen, dass die elastischen Elemente 12.1, 12.2 an Verankerungselementen 13.1, 13.2 fixiert sind, welche ihrerseits im Rohrelement eingebetet sind. Die Verankerungselemente 13.1, 13.2 treten z. B. aus dem Boden der Aussparung 11.1, 11.2 hervor. Es kann sich um Bügel handeln, die mit einem Abschnitt aus dem Rohrelement heraus an den Körper der elastischen Elemente 12.1, 12.2 heran oder in ihn hinein ragen.

Die Aussparungen 11.1, 11.2 haben im vorliegenden Beispiel im Querschnitt einen rechteckigen kanalförmigen Bodenbereich und einen sich zur Stirnseite 3.1, 3.2 der Rohrelemente hin konisch aufweitenden Oberbereich. Die elastischen Elemente 12.1, 12.2 fügen sich passgenau in den Querschnitt hinein. Dies wird z. B. dadurch erreicht, dass bei der Herstellung der Rohrelemente die mit Verankerungselementen 13.1, 13.2 versehenen elastischen Elemente 12.1, 12.2 in den noch weichen Beton hineingedrückt werden oder an der Verschalung fixiert werden. Nach dem Aushärten des Betons sind somit die elastischen Elemente 12.1, 12.2 dauerhaft in der Stirnseite der Rohrelemente gehalten (eingegossen).

Das Rohrelement 2.1 hat eine Rohrmanschette 15, welche über die Stirnseite 3.1 des Rohrelements 2.1 in Längsrichtung hinaus ragt. Die Rohrmanschette 15 ist z. B. ein ringförmig umlaufendes Stahlband, das fluchtend zur Aussenmantelfläche des Rohrelements 2.1 angeordnet ist. Das an der Fuge 1 gegenüberliegende Rohrelement 2.2 hat eine umlaufende Verjüngung 33, welche in die Rohrmanschette 15 hinein geschoben werden kann. Ein an der Verjüngung 33 platzierter, um das Rohrelement 2.2 laufender Kontaktring 34 schafft einen radialen Kontakt zwischen dem Rohrelement 2.2 und der Rohrmanschette 15. Auf diese Weise sind die beiden Stirnseiten 3.1, 3.2 der Rohrelemente 2.1, 2.2 quer zur Längsachse der Rohrelemente 2.1, 2.2 geführt und parallel zur Längsachse gegeneinander frei verschiebbar.

Das Rohrstück 10 ragt über die Innenwände 15.1 und 15.2 hinaus in das Innere der Rohrleitung.

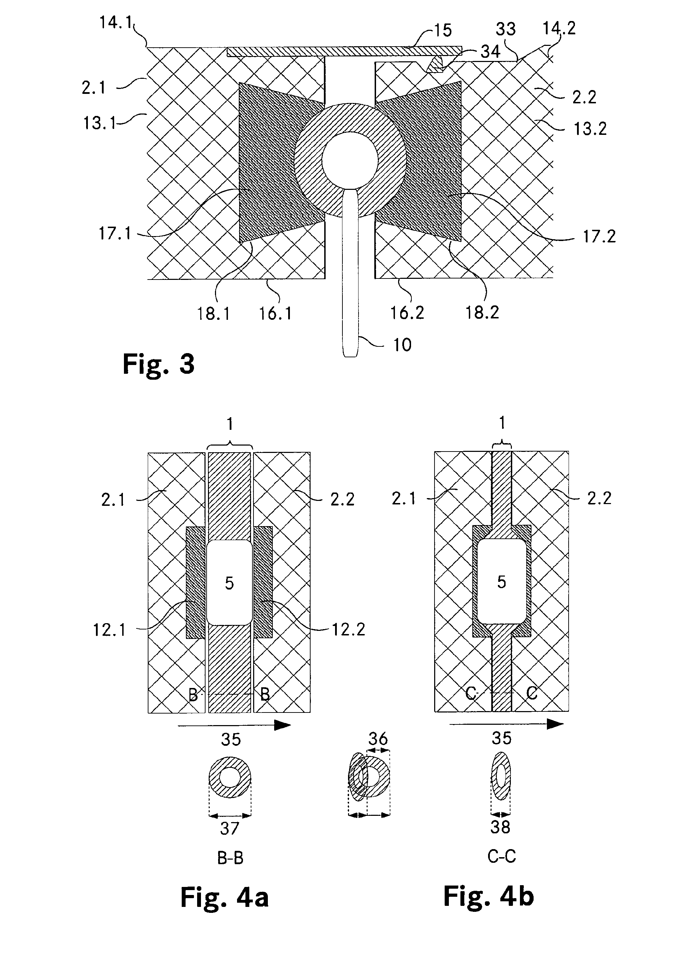

Fig. 3 zeigt schematisch eine Ausführungsform, bei welcher die elastischen Elemente 17.1, 17.2 durch Formschluss in der jeweiligen Aussparung 18.1, 18.2 festgehalten sind. Weil die elastischen Elemente 17.1, 17.2 im Bereich des Bodens der Aussparung 18.1, 18.2 breiter sind als im Öffnungsbereich der Aussparung 18.1, 18.2, d. h. als an der Stirnseite des Rohrelements, können sie nicht aus der entsprechend geformten Aussparung 18.1, 18.2 hinausrutschen. Es handelt sich also um eine Fixierung in der Art eines Schwalbenschwanzes oder in der Art einer Nut-Feder-Konstruktion. Der Formschluss lässt sich also mit einer Aussparung erreichen, die eine Verengung besitzt. Es sind auch Rippen/Rillen-Anordnungen denkbar.

Die in Fig. 3 beispielhaft gezeigte Verbindung kommt ohne Verankerungselement aus, was aber nicht heisst, dass es nicht vorteilhaft sein kann, zusätzlich ein Verankerungselement im Sinn der Fig. 1 vorzusehen (z. B. aus produktionstechnischen Gründen).

Die Fig. 4a,b zeigen schematisch Querschnitte durch die Fuge im Bereich des Verbindungsstücks und die dazu gehörenden Querschnitte des Schlauchs. In Fig. 4a ist die Fuge 1 breit. Das heisst, die Rohrelemente 2.1, 2.2 stehen unter keinem oder nur unter einem geringen Druck in Längsrichtung 35 der Rohrleitung. Der Schlauch 4 ist nicht oder nur wenig zusammengedrückt und das Verbindungsstück 5 ist nicht oder nur wenig in die elastischen Elemente 12.1, 12.2 eingedrückt. Der Querschnitt des Schlauchs 4 entlang der Linie B-B ist gleichmässig rund.

Im Gegensatz dazu zeigt Fig. 4b eine schmale Fuge 1, wie sie bei hohem Vortriebsdruck auf die Rohrelemente 2.1, 2.2 vorliegt. Der ringförmige Schlauch 4 ist gequetscht, und das starre Verbindungsstück 5 ist in entsprechendem Ausmass in die elastischen Elemente 12.1, 12.2 eingedrückt. Der Querschnitt des Schlauchs 4 entlang der Linie C-C ist oval.

Es ist mit der erfindungsgemässen Anordnung also möglich, trotz des formstabilen Verbindungsstücks eine für den Rohrvortrieb geeignete Fuge zwischen Rohrelementen zu schaffen. Die Fuge kann sich in Längsrichtung der Rohrleitung ausdehnen und verengen, ohne dass das Verbindungsstück oder das Rohrelement beschädigt werden können. Auch Richtungsänderungen der Rohrleitung sind so problemlos möglich. Bei einer Richtungsänderung ist die Fuge nicht überall gleich breit entlang der Umfangsrichtung der Rohrelemente. Durch die elastischen Elemente ist auch bei den grossen benötigten Vortriebskräften sichergestellt, dass Verbindungsstück und Rohrelement intakt bleiben, unabhängig davon, ob es im verengten oder ausgedehnten Abschnitt einer solchen Fuge ist.

Weiter kann durch eine entsprechende Dimensionierung der elastischen Elemente gewährleistet werden, dass die Dichtung im Bereich des Verbindungsstücks in gleicher Weise gegeben ist, wie im übrigen Bereich des übrigen Schlauchs. Dazu folgendes:

Der Schlauch hat im Querschnitt betrachtet einen bestimmten Arbeitsbereich W 36: Dieser ist in Längsrichtung der Rohrleitung (bzw. der zugehörigen Rohrelemente) durch die maximale Fugenbreite Bmax 37 begrenzt, die sich während des Vortriebs einstellt. Das sich dabei einstellende Innenvolumen des Schlauchs wird mit einem nichtkomprimierbaren Medium, z. B. Wasser gefüllt, und das Ventil wird verschlossen. Die beiden Stirnseiten der einander gegenüberliegenden Rohrelemente sind dann gerade noch in dichtendem Kontakt mit dem Schlauch. Bei einem runden Schlauch entspricht Bmax dem Aussendurchmesser des Schlauchs.

Andererseits kann der Schlauch bei hohem Vortriebsdruck im Querschnitt maximal zusammengepresst werden, so dass er nahezu flach ist, wobei sein Innenvolumen konstant bleibt. Die Fuge hat dann eine minimale Fugenbreite Bmin 38, die im Wesentlichen der doppelten Wandstärke des Schlauchs entspricht. Der Arbeitsbereich W 36 entspricht der Differenz von Bmax 37 zu Bmin 38.

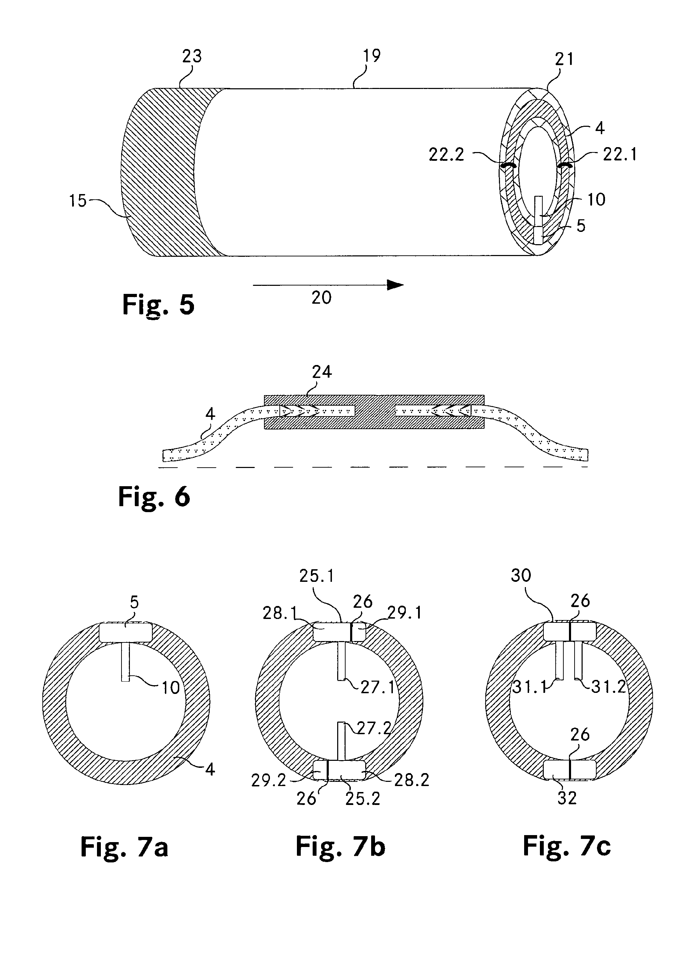

Fig. 5 zeigt ein Rohrelement 19, wie es für den Rohrvortrieb verwendet werden kann. Zum besseren Verständnis wird hier eine Rohrvortriebsrichtung 20 definiert. An der in Rohrvortriebsrichtung 20 vorderen Stirnseite 21 befindet sich ein ringförmiger Schlauch 4 mit einem starren Verbindungsstück 5 mit einem Rohrstück 10 als Zugang, das in das Innere des Rohrelements 19 gerichtet ist. Der Schlauch ist an der vorderen Stirnseite 21 fixiert, z. B. mit zwei Bügeln 22.1 und 22.2. Diese Bügel sind zumindest soweit flexibel, dass sie beim Zusammenpressen von Rohrelementen nicht brechen, den Schlauch 4 nicht beschädigen und eine gute Dichtung ermöglichen. An der im Sinne des Rohrvortriebs hinteren Stirnseite 23 ist eine Rohr-Manschette 15 angebracht. Derart ausgestattete Rohrelemente können im Rohrvortrieb aneinandergereiht werden.

Fig. 6 zeigt eine alternative Ausführungsform der äusseren Manschette 24 zur Fixierung der Schlauchenden. Die Manschette 24 weist in ihrem Inneren Widerhaken auf, die zusätzlich verhindern, dass die Schlauchenden abrutschen können.

In den Fig. 7a bis 7c sind drei Varianten eines Schlauchrings dargestellt. Bei der einfachsten Variante gemäss Fig. 7a ist der Ring durch ein einziges Schlauchstück 4 gebildet. Die beiden Schlauchenden dieses Schlauchstücks 4 sind über das erfindungsgemässe Verbindungsstück 5 verbunden. Es entsteht so ein durchgehender Innenraum, der über den Zugang 10 befüllt, entleert und kontrolliert werden kann.

Bei der in Fig. 7b gezeigten Ausführungsvariante besteht der ringförmige Schlauch aus zwei Schlauchstücken, die über zwei Verbindungsstücke 25.1 und 25.2 verbunden sind. Diese Verbindungsstücke sind jedoch nicht durchgehend. In ihrem Inneren ist jeweils eine Barriere 26 vorhanden, die somit dem Zugang 27.1, 27.2 gegenüber je eine offene Seite 28.1, 28.2 und eine abgeschlossene Seite 29.1, 29.2 definiert. Jedes Schlauchstück ist mit einer offenen und einer abgeschlossenen Seite verbunden. Der so gebildete ringförmige Schlauch weist zwei voneinander getrennte und unabhängig kontrollierbare Innenräume auf.

Fig. 7c zeigt eine weitere Variante eines ringförmigen Schlauchs mit einem geteilten Innenraum. Zwei Schlauchstücke werden über zwei unterschiedliche Verbindungsstücke miteinander zu einem Ring verbunden. Das Verbindungsstück 30 weist zwei Zugänge 31.1 und 31.2 auf. Diese sind im Inneren des Verbindungsstücks 30 durch eine Barriere 26 voneinander getrennt. Das Verbindungsstück 32 entspricht im Wesentlichen einem Rohrstück, das im Inneren eine Barriere 26 aufweist und keinen Zugang besitzt. Zwei Schlauchstücke werden mit den Verbindungsstücken 30 und 32 zu einem ringförmigen Schlauch verbunden. Dieser Schlauch weist ebenfalls zwei voneinander getrennte und unabhängig kontrollierbare Innenräume auf.

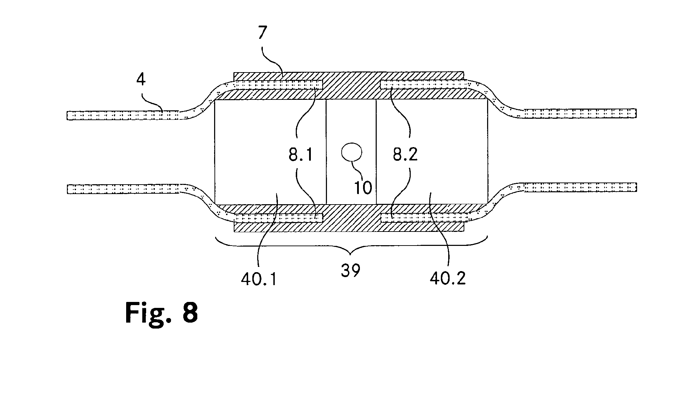

Fig. 8 zeigt eine Variante eines starren Verbindungsstücks 39, das den Schlauch zu einem geschlossenen Ring verbindet. Es besteht im Wesentlichen aus zwei inneren Stützhülsen 40.1, 40.2 und einer äusseren Manschette 7. Eine innere Stützhülse 40.1 ragt in das Ende 8.1 des Schlauchs 4, während sich die andere Stützhülse 40.2 in dem Ende 8.2 des Schlauchs 4 befindet. Beide Enden mit beiden Stützhülsen sind von der Manschette 7 umschlossen. Dadurch werden die beiden Schlauchenden 8.1, 8.2 mit den inneren Stützhülsen 40.1, 40.2 relativ zueinander fixiert. In dem Spalt zwischen den Schlauchenden befindet sich der Zugang 10, welcher z. B. ein Rohrstück sein kann.

Die gezeigten Ausführungsbeispiele lassen sich in diverser Hinsicht abwandeln. Die Konstruktion des Verbindungsstücks kann einteilig oder mehrteilig sein. Sind die äussere Manschette und die innere Stützhülse als zwei getrennte Teile ausgeführt, kann die Schulter an der Manschette oder an der Stützhülse ausgebildet sein. Anstelle einer Schulter kann aber auch ein separates Ringelement vorgesehen sein, welches auf die Stützhülse geschoben werden kann.

Die elastischen Elemente lassen sich in diversen Formen ausführen. Insbesondere sind dreieckige und trapezförmige Querschnitte zu erwähnen. Die Aussparung ist dann entsprechend V-förmig mit spitzem oder abgeflachtem Boden.

Auch die Form des Verbindungsstücks kann je nach Umständen variiert werden. Während in den Figuren ein Verbindungsstück mit kreisrundem Querschnitt und (abgesehen vom Zugang) rotationssymmetrischer Form gezeigt ist, kann dieses im Prinzip auch vier- oder mehreckig sein. Es braucht auch nicht spiegelsymmetrisch bezüglich der (senkrecht zur Längsachse des Verbindungsstücks stehenden) Mittelebene zu sein. Insbesondere kann es z. B. konisch ausgebildet sein, um das Einführen in die Schlauchenden zu erleichtern.

Die Erfindung lässt sich im Prinzip auch für das Verbinden von Schlauchenden verwenden, ohne dass ein geschlossener Schlauchring gebildet wird.

Zusammenfassend ist festzustellen, dass durch die Erfindung eine technisch einfach herzustellende und vielseitig gestaltbare Konstruktion einer Schlauchverbindung geschaffen worden ist, die in variablen Fugen einsetzbar ist.

## Patentansprüche

1. Rohrleitung mit mindestens zwei Rohrelementen (2.1, 2.2) mit je einer Stirnseite (3.1, 3.2), wobei zwischen den Stirnseiten eine Fuge (1) gebildet ist, in welcher sich ein Schlauch (4) als Druckübertragungsmittel und Dichtung befindet, welcher insbesondere für den Rohrvortrieb geeignet ist, **gekennzeichnet dadurch, dass** sich im Schlauch ein formstabiles Verbindungsstück (5) befindet, und dass sich an den Stirnseiten der Rohrelemente Aussparungen (11.1, 11.2) befinden, in welchen elastische Elemente (12.1, 12.2) untergebracht sind, in welche das starre Verbindungsstück (5) gebettet ist.

2. Rohrleitung nach Anspruch 1, **gekennzeichnet dadurch, dass** das Verbindungsstück (5) eine innere Stützhülse (6) und eine äussere Manschette (7) aufweist, und dass die äussere Manschette (7) radial verformt ist, um einen zwischen innerer Stützhülse (6) und äusserer Manschette (7) befindlichen Abschnitt des Schlauchs (4) einzuklemmen.

3. Rohrleitung nach einem der Ansprüche 1 und 2, **gekennzeichnet dadurch, dass** das Verbindungsstück (5) einen zusätzlichen Zugang (10) aufweist, der den Innenraum des Schlauches mit dem Inneren der Rohrleitung verbindet.

4. Rohrleitung nach Anspruch 3, **gekennzeichnet dadurch, dass** das der Zugang ein Ventil und/oder ein Druckmessgerät beinhaltet.

5. Rohrleitung nach einem der Ansprüche 1 bis 4, **gekennzeichnet dadurch, dass** die elastischen Elemente (12.1, 12.2) an den Rohrelementen (2.1, 2.2) befestigt sind.

6. Rohrleitung nach einem der Ansprüche 1 bis 5, **gekennzeichnet dadurch, dass** die elastischen Elemente (12.1, 12.2) in Längsrichtung der Rohrelemente (35) gemessen einen Deformationsbereich aufweisen, der mindestens so gross ist wie ein Durchmesser des Schlauchs (4) abzüglich einer doppelten Wandstärke des Schlauchs (4).

7. Rohrleitung nach einem der Ansprüche 1 bis 6, **gekennzeichnet dadurch, dass** die Rohrelemente (2.1, 2.2) aus armiertem Beton hergestellt sind.

8. Rohrleitung nach einem der Ansprüche 1 bis 7, **gekennzeichnet dadurch, dass** mindestens eines der Rohrelemente (2.1, 2.2) an einer Stirnseite (3.1, 3.2) eine äussere Rohrmanschette (15) aufweist, welche die Fuge (1) abdeckt.

9. Rohrleitung nach einem der Ansprüche 1 bis 8, **gekennzeichnet dadurch, dass** der Schlauch (4) an einer Stirnseite (3.1) eines Rohrelements (2.1) befestigt ist, und eine Rohr-Manschette (15) an einer Stirnseite (3.2) des anderen Rohrelements (2.2) befestigt ist.

10. Für ein Rohrvortriebsverfahren geeigneter flexibler Schlauch (4), insbesondere für eine Rohrleitung nach Anspruch 1, welcher eine in sich geschlossene Form, insbesondere einen Ring, ein Viereck oder Vieleck, bildet und als Druckübertragungsmittel und Dichtung einer Fuge (1) zwischen zwei Rohrelementen (2.1, 2.2) geeignet ist, **gekennzeichnet dadurch, dass** er ein formstabiles Verbindungsstück (5) aufweist, welches ein erstes und ein zweites Ende (8.1, 8.2) des flexiblen Schlauchs (4) miteinander verbindet.

11. Für ein Rohrvortriebsverfahren geeignetes Rohrelement (2.1), **gekennzeichnet dadurch, dass** es an mindestens einer Stirnseite (3.1) eine Aussparung (11.1) aufweist, in welcher ein elastisches Element (12.1) enthalten ist, um ein formstabiles Verbindungsstück (5) einzubetten.

12. Verfahren zum Erstellen einer Rohrleitung mit mindestens zwei Rohrelementen (2.1, 2.2) mit je einer Stirnseite (3.1, 3.2), wobei zwischen den Stirnseiten (3.1, 3.2) eine Fuge (1) gebildet ist, in welcher sich ein Schlauch (4) als Druckübertragungsmittel und Dichtung befindet, welcher für den Rohrvortrieb geeignet ist, **gekennzeichnet dadurch, dass** sich im Schlauch (4) ein formstabiles Verbindungsstück (5) befindet, und dass sich an den Stirnseiten (3.1, 3.2) der Rohrelemente (2.1, 2.2) Aussparungen (11.1, 11.2) befinden, welche elastische Elemente (12.1, 12.2) enthalten, in welche das formstabile Verbindungsstück (5) gebettet wird.

13. Verfahren nach Anspruch 12, **gekennzeichnet dadurch, dass** über den Zugang (10) im Schlauch (4) der Druck in der Rohrleitung/im Schlauch gemessen und/oder verändert wird.

14. Fugenkonstruktion umfassend ein erstes und ein zweites Bauteil als Begrenzung einer zwischen ihnen gebildeten Fuge (1) und einen flexiblen Schlauch (4), welcher die Fuge (1) dichtend auszufüllen vermag, **gekennzeichnet dadurch, dass** der Schlauch (4) ein formstabiles Verbindungsstück (5) aufweist und dass die Bauteile in einer Umgebung des Verbindungsstücks (5) elastische Elemente (12.1, 12.2) aufweisen, in welche das Verbindungsstück (5) eingebettet ist.
